# EUROPEAN PATENT APPLICATION

(11) **EP 4 261 581 A1**
(43) Date of publication of application: **18.10.2023**
(21) Application number: 23167330.2
(22) Date of filing: 11.04.2023
(51) Int. Cl.: G02B 7/08, G02B 27/64

(54) **IMAGING OPTICAL SYSTEM**

(30) Priority: 11.04.2022 DE 102022108805
(71) Applicant: Nextlens Switzerland AG, 8953 Dietikon (CH)
(72) Inventor: GEISSNER, Markus, 8962 Bergdietikon (CH); ASCHWANDEN, Manuel, 6319 Allenwinden (CH); BOSDAS, Ilias, 8038 Zürich (CH); BEYGI, Mohammad, 8953 Dietikon (CH); HOBBIS, Jonathan, 8802 Kilchberg (CH)
(74) Representative: Schulz Junghans Patentanwälte PartGmbB

(57) **Abstract**

The invention relates to an imaging optical system (1) comprising a folding component (2) and a tunable optical component (3) that are arranged on an optical path of the optical system (1), wherein the tunable optical component (3) comprises a first optical surface (7), a second optical surface (8) and a deformable internal space (9) between the first optical surface (7) and the second optical surface (8), which internal space (9) is filled with a transparent liquid (11), wherein an optical property of the tunable optical component (3) is adjustable by altering a shape of the internal space (9). The imaging optical system (1) further comprises a moveably mounted cage element (13) that at least partly encloses the folding component (2) and is mechanically coupled to the tunable optical component (3) such that a displacement of the cage element (13) causes a change of the optical property of the tunable optical component (3) and an actuator (14, 15, 16) that is arranged between the folding component (2) and the cage element (13) and the actuator (14, 15, 16) is configured to exert a displacement force to the cage element (13).

## Description

The invention relates to an imaging optical system according to claim 1.

Imaging optical systems are basically known and used in various devices such as mobile phones. It is desirable that a imaging optical system has a compact design and at the same time to be able to adjust at least one optical parameter, in particular during the capture of images by means of the imaging optical system. It is an object of the present invention to propose an imaging optical system with which these objectives can be achieved.

The objective is solved by an imaging optical system according to claim 1. Preferred embodiments are subject-matters of dependent claims 2 to 15.

According to the invention, the imaging optical system comprises a folding component and a tunable optical component that are arranged on an optical path of the optical system. The tunable optical component comprises a first optical surface, a second optical surface and a deformable internal space between the first optical surface and the second optical surface. The internal space is filled with a transparent liquid. An optical property of the tunable optical component is adjustable by altering a shape of the internal space. The imaging optical system further comprises a moveably mounted cage element that at least partly encloses the folding component and is mechanically coupled to the tunable optical component such that a displacement of the cage element causes the change of the optical property of the tunable optical component. Furthermore, an actuator is arranged between the folding component and the cage element, wherein the actuator is configured to generate a displacement force to the cage element.

The invention is based on the finding that an imaging optical system with the above-mentioned features can have a compact design. At the same time, at least one optical property can be adjusted during image acquisition in a simple manner with regard to the structure of the imaging optical system.

According the invention, the folding component can be considered as an optical component that allows to deflect and/or diverge the path of a light beam that enters the imaging optical system. In a possible embodiment, the folding component comprises a prism, a mirror or a comparable optical component. Preferably, the folding component defines a light entry axis and a light exit axis that enclose a folding angle of at least 30°, preferably at least 45°, highly preferred 90°. Therefore, the folding component preferably folds the optical path by at least 30°, more preferably at least 45°, highly preferred 90°. Such an angularity between the light entry axis and the light exit axis of the folding component advantageous for an application of the imaging optical system in a mobile phone with a flat design. This is because imaging optical system may be arranged such that the light entry axis is oriented perpendicular to a main extension plane of the mobile phone and such that the light exit axis runs parallel to said extension plane. A plurality of components, especially optical components, can be arranged in the part of the optical path than runs parallel to the extension plane and therefore do not negatively affect the flat design of the mobile phone. Naturally, these advantages can also be achieved with other devices with which the imaging optical system is.

According to the invention, the tunable optical component has at least one optical property, which can be adjusted by altering the shape of the internal space. The invention is not limited to a specific design of the tunable optical component or which optical property is adjustable. It is solely relevant, that the first optical surface and the second optical surface are each at least partly transparent in an area that is arrangeable in the optical path of the imaging optical system and which are relatively displaceable to each other. Deformation of the internal space can therefore basically take place by completely or partially displacing the first surface and the second surface relative to each other. Preferably, in at least one state of the tunable optical component, the first optical surface and/or the second optical surface are flat and spaced parallel to each other. It is also within the scope of the invention that, in at least one state of the imaging optical system, the first and/or the second optical surface each have a curved shape. The invention is not limited to a specific transparent liquid, which, in a simple embodiment, may be an optical oil or another suitable liquid.

By providing a deformation of the internal space, the path of a light beam impinging the tunable component along the optical path can be influenced. This makes it possible, for example, to easily perform optical image stabilisation when the imaging optical system is part of an image acquisition system. Such an optical image stabilisation is advantageous if the imaging optical system is part of a moving system, such as a mobile phone, which cannot be held in a defined position and wherein undesired movements may negatively affect the image quality.

According to the invention, the cage element is a structural component, which is designed to receive a force and/or a torque and to transmit it to the tunable optical component, in order to achieve a deformation of the internal space and therefore to effect the change of at least one optical property of the tunable optical component.

For this purpose, the cage element is moveably mounted at least with respect to the folding component. It is essential, that the cage element at least partially encloses the folding component. Preferably, the cage element surrounds the folding component in at least one plane by more than 45°, preferably by more than 90°, more preferably by more than 180°. The cage element preferably provides a space, in which the folding component is arranged and in which it is enclosed by the cage element. In this case, the cage element preferably has one or more openings that give access to the space, in which the folding component is enclosed by the cage element and through which the optical path passes. If it is presumed that the folding component has a light entry axis and a light exit axis, then the light entry axis passes through a first opening of the cage element and the light exit axis passes through a second opening of the cage element.

The mechanical coupling between the cage element and the tunable optical component may be achieved by a direct mechanical connection between said components or by in indirect connection using additional means between said components. The invention is not limited to a particular type of connection. It is therefore possible for the mechanical coupling to be point-like and/or linear and/or planar.

Preferably, the tunable optical component is arranged such that the first optical surface is facing the cage element and the change of the at least one optical property of the tunable optical component is achieved, by displacing the first optical surface with respect to the second optical surface. The second surface may be mounted on a component of the imaging optical system that is fixedly arranged with respect to the moveable cage element, for example a flat, rigid glass. In another simple embodiment, the tunable optical component may comprise a third surface that is arranged between the first and second surface and delimits the internal space laterally with respect to the optical path. This third surface may also be used to mechanically couple the cage element to the tunable optical component.

According to the invention, the actuator is a means to displace the cage element with respect to the folding component. It is advantageous that the actuator is arranged between the folding component and the cage element, since this allows a compact design of the imaging optical system.

In a preferred embodiment, the tunable optical component is a tunable prism, wherein the first optical surface is rigid and the second optical surface is rigid and the optical property is adjustable by changing an angle between the first optical surface and the second optical surface. Alternatively, the tunable optical component is a tunable lens, wherein the first or the second optical surface is deformable and the optical property is adjustable by changing an angle between the first optical surface and the second optical surface and by changing a shape of the deformable first or second surface.

For the embodiment, wherein the tunable optical component is designed as a prism whose first and second surfaces are rigid, it is possible to use the imaging optical system for optical imaging stabilization by tilting said surfaces relative to each other and thereby change the optical path within the imaging optical system. Hereby, a beam of light can be directed to a specific area of an image sensor that may be used in the imaging optical system.

The same effect can also be achieved with the preferred embodiment, wherein the first and second surfaces are designed as deformable membranes. In addition, however, it is also possible to change a focal plane of the tunable optical component. This can be done in particular by increasing the hydrostatic pressure of the transparent liquid in the internal space, which can lead to the change of a curvature of the first and/or the second surface. Such a deformation of the curvature can be achieved in a simple manner if an optical glass is provided, that is arranged in the optical path at the first or the second optical surface and against which the tunable optical component can be pressed by the cage element. The setting of such a curvature causes a shift of a focal plane so that the imaging optical system can provide a focusing function.

In a preferred embodiment, the imaging optical system comprises at least one image sensor that is arranged in the optical path of the imaging optical system and wherein the folding component is arranged between the tunable optical component and the image sensor along the optical path. Alternatively, the optical system comprises at least one image sensor that is arranged in the optical path of the optical system and wherein the tunable optical component is arranged between the folding component and the image sensor with respect to the optical path.

According to a first of both preferred arrangements described above, the folding component is arranged between the tunable component and the image sensor. This means that a light beam along the optical axis first passes the tunbale optical component before being deflected by means of the folding component and redirected towards the image sensor. If such an imaging optical system is used in a mobile phone, the tunable optical component can be arranged parallel to the main extension plane of the mobile phone. The first optical surface may face the folding element and preferably be separated from it by a rigid optical glass. The adjustment of at least one optical property of the tunable component can be effected by displacing the first optical surface or preferably the entire tunable optical component against the rigid optical glass, resulting in a deformation of the interior space.

An advantage of this first arrangement is that the assembly of the optical system is made easier, in particular if it is assembled with a mobile phone. This is due to the fact that in a first step all optical components can be mounted with the exception of the tunable optical component. In this state, all necessary quality control measures can be taken and, in particular, measurements can be performed to ensure that the already assembled components have all the required optical properties. These measurements are not influenced by the tunable optical component. As soon as all quality control measures have been completed the tunable optical component be mounted.

According to the second of both preferred arrangements, the tunable component may be positioned along the optical path between the folding component and the image sensor. The first optical surface of the tunable component may face the folding component. A rigid optical glass may be arranged on the opposite side of the tunable optical component at the second optical surface. The adjustment of at least one optical property of the tunable component can be effected by displacing the first optical surface or preferably the entire tunable optical component against the rigid optical glass, resulting in a deformation of the interior space.

The advantage of an arrangement, in which the tunable optical component is placed between the folding component and the image sensor is the compact design of the imaging optical system. Furthermore, when the imaging optical system is used in a cell phone, the tunable optical component does not have to be arranged parallel to the main extension axis of the cell phone, so that a flat design can be achieved.

In a preferred embodiment, the cage element is moveably mounted with respect to the folding component by a bearing means. The bearing means is configured such that the cage element is rotatable about at least one rotation axis that is perpendicular to an optical axis, which extends between the folding component and the tunable optical component, such that an optical image stabilization is achievable. Additionally or alternatively, the bearing means is configured such that the cage element is displaceable along the optical axis that extends between the folding component and the tunable optical component, such that a displacement of a focal plane of the tunable component is achievable.

According to the preferred embodiment described above, the design of the bearing means allows to define one or more degrees of freedom for the cage element. Preferably, the bearing means is an elastic spring element that is essentially flat and in at least one state extends perpendicular to the optical axis between the cage element and the tunable optical component. For this purpose, the spring element can be designed in a simple manner as an easily deformable, flat sheet metal or plastics part. The stiffness of the spring element can be determined by its material properties and shape. Preferably, the bearing means comprises a mechanical abutment that delimits a displacement of the cage element. For this purpose, the bearing means, which is preferably designed as a spring element, can have at least two areas of different stiffnesses, whereby the cage element is mechanically coupled to the bearing means in the area of lower stiffness and the area of higher stiffness restricts the movement of the cage element with respect to at least one degree of freedom of the cage element.

It is within the scope of the preferred embodiment that the cage element is mounted via the bearing means and at least another component of the imaging optical system. For example, a component of the tunable optical component may also have a bearing function for the cage element, for example if the cage element is mechanically coupled to the tunable optical component. In this case, the first optical surface, which faces the cage element and is coupled to the cage element, can serve as its bearing due to its own stiffness, at least when the cage element is not moving.

According to one embodiment, the actuator comprises a shape memory alloy. The shape memory alloy is fixedly linked to the cage and the prism. In particular, the actuator comprises multiple wires comprising a shape memory alloy, wherein the wires are arranged to contract in a controllable manner by heating the wired above a transition temperature. For altering the tuning state of the tunable optical component, the shape memory alloy is heated above a transition temperature, to move the cage with respect to the folding element.

In a preferred embodiment the actuator comprises at least one coil and at least one magnet, wherein the coil is fixedly arranged with respect to the folding component and the magnet is fixedly attached to the cage element. In particular, a current in the coil causes a Lorentz force acting between the cage and the folding element.

The operation of the actuator is easily possible by generating an electric current that flows in the coil, thereby creating a magnetic field, which interacts with the magnetic field of the magnet. An interaction between these magnet fields leads to a displacement force that can be exerted on the cage element. It is advantageous, if at least the coil is arranged within the space, in which the cage element encloses the folding component. This allows a compact design of the imaging optical system. In addition, it is advantageous that the coil is fixedly arranged in the imaging optical system. During a displacement of the cage element there is no relative displacement between the coil and a power source that provides the electric current for the coil. It is therefore easily possible to reliably electrically contact the coil with the power source. Conversely, the arrangement of the magnet at the moveably mounted cage element is advantageous, since the magnet does not require an electrical contact with the power source in order to generate a displacement force.

In an embodiment, in which the cage element is moveably mounted about a rotation axis, the magnet is preferably arranged at a distance between 2 mm and 15 mm, in particular between 5 mm and 10 mm, from the rotation axis of the cage element. The bigger the distance between the magnet and the rotation axis, the bigger the lever between the displacement force and the rotation axis, which correspondingly leads to a bigger torque in order to create a rotation of the cage element with respect to the rotation axis. A rotation torque may therefore be set by the geometry of the cage element and the position of the magnet within the cage element, preferably independently of the power of the actuator.

Preferably a magnetic shield element is arranged on a side of the magnet facing away from the coil. A magnetic shield is advantageous because the magnet of the actuator does not interfere with other components by its magnetic field. On the opposite, a magnetic shield also serves to keep the actuator out of the influence of other magnetic fields and thus enables its reliable operation regardless of its location or environment of the imaging optical system.

In a preferred embodiment, the actuator is a first actuator and the displacement force is a first displacement force. Further, the coil and the magnet of the first actuator are arranged such that the first displacement force causes a rotation of the cage element about a first rotation axis that is perpendicular to the optical axis extending between the folding component and the tunable optical. By the rotation of the cage element about the first rotation axis an optical image stabilisation is provided. Additionally or alternatively at least the first displacement force is directed parallel to the optical axis and causes a displacement of the cage element along the optical axis such that a change of the focal plane of the tunable optical component is provided.

The further development described above is advantageous since only one actuator can be used to tilt the cage element about the first rotation axis and to displace the cage element along the optical axis, allowing both to stabilize the optical image and change the focal plane of the tunable component. Preferably, the bearing means is designed to provide two or more degrees of freedom for the aforementioned movements of the cage element.

In one possible embodiment, two first actuators are provided, which can be arranged on two opposite sides of the cage element and can be controlled in different ways to cause a tilt of the cage element about the first axis of rotation and/or to cause a displacement of the cage element along the optical axis. In this embodiment, it is possible to generate currents in the coils of both first actuators in a way that magnetic fields are generated with opposing field forces parallel to the optical axis and thus exert two correspondingly opposite displacement forces on the cage element. These opposite displacement forces cause a torque about the first rotation axis, which leads to a tilt of the cage element about said first rotation axis. Alternatively, it is possible to generate currents in such a way that the field forces are directed in the same direction and parallel to the optical axis. This may cause a displacement of the cage element along the optical axis, which leads to a change of the focal plane of the tunable optical component.

In a preferred embodiment, the optical system further comprises a second actuator with at least one coil and at least one magnet, wherein the coil is fixedly arranged with respect to the folding component and the magnet is fixedly attached to the cage element and wherein the coil and the magnet of the second actuator are arranged such that the second displacement force causes a rotation of the case element about a second rotation axis that is perpendicular to the first rotation axis and perpendicular to the optical axis.

By means of the second actuator, it is possible to provide a further option for optical image stabilization by tilting the cage element about the second rotation axis. Preferably, the second actuator is arranged on the optical axis which runs between the folding element and the tunable optical component, whereby the folding element is arranged between the second actuator and the tunable optical component.

In another preferred embodiment, the first actuator comprises a first pair of coils that are arranged in a common first plane and are configured such that in the event of a current flow two opposing magnetic field forces interact with the at least one magnet that is arranged on the cage element and generate the first displacement force that causes the rotation of the cage element about the first rotation axis. The second actuator comprises a second pair of coils that are arranged in a common second plane that is parallel to the first plane and are configured such that in the event of a current flow two opposing magnetic field forces interact with the at least one magnet that is arranged on the cage element and generate the second displacement force that causes the rotation of the cage element about the second rotation axis. An optical image stabilization is achievable by the first actuator and/or the second actuator.

The above-described embodiment allows a space-saving design of the imaging optical system and at the same time to provide means that allow the cage element to be rotated about two rotation axes that are perpendicular to each other. For this purpose, the coils of the first or the second actuator can be connected in series and have oppositely directed turns. By generating an electric current in such a pair of coils, two magnetic fields are generated with two oppositely directed magnetic field forces. Preferably, the coil centers are offset from the first rotation axis of the cage element, so that the two magnetic field forces in cooperation with at least one magnet cause a rotation of the cage element about the first rotation axis.

Preferably, the first pair of coils of the first actuator and the second pair of coils of the second actuator are rotated by 90° with respect to each other. The effective axes of the resulting torques for tilting the cage element are therefore also rotated by 90° with respect to each other and correspond to the rotational axes of the cage element. Each pair of coils is preferably designed as a planar coil and may be manufactured as a printed circuit board. In particular, the first and second actuators may be manufactured as multilayer printed circuit boards that are physically connected to each other.

In an alternative embodiment, the actuator comprises at least one actuation element, which is mechanically coupled to the cage element and/or the tunable optical component and is at least in part made of a shape memory alloy, which is configured to exert a displacement force on the cage element and/or the tunable optical component.

In accordance with the further development described above, a shape memory alloy is used to exert a displacement force directly or indirectly via the cage element on the tunable component during heating. For this purpose, the actuation element can be electrically contacted in order to heat up during a current flow and to deform into a freely definable state. The resulting force can in particular be used as a displacement force for the cage element. It is within the scope of this embodiment that the current can be adjusted as required in order to set the displacement force as a function of the current.

In a preferred embodiment, at least one position sensor, particularly a Hall-sensor, is arranged such as to detect a displacement of the cage element with respect to a fixedly arranged component of the optical system, in particular with respect to the coil and/or the folding component.

The further embodiment described above is not limited to a particular embodiment of the position sensor. However, its design as a hall sensor, which measures the field strength of a magnetic field in a manner known per se and outputs a measurement signal, in particular a voltage, as a function of the magnetic field strength, is particularly advantageous. A Hall-sensor is preferably provided if the actuator comprises a magnet whose position can change during operation of the imaging optical system. By an arrangement of the Hall-sensor, which is stationary in relation to the cage element and a magnet held thereon, the position of the cage element can be determined at any time. Preferably, the position sensor is arranged in such a way that in at least one state of the cage element, the position sensor and the magnet are arranged opposite each other.

In a preferred embodiment, a controller is connected to both the position sensor and the actuator by means of a signal-path and is configured to control a relative displacement of the cage element with respect to the folding component of the optical system as a function of a position signal of the position sensor.

By means of the further development described above, the position sensor and the controller can be components of a control loop with which it is possible to ensure reliable operation of the imaging optical system. In particular, it is possible to actively compensate for any displacement of the cage element due to its weight and the natural effect of gravity. For this purpose, several position sensors can be provided which have different measuring axes in order to be able to detect and compensate for an undesired displacement of the cage element in any position of the imaging optical system.

In a preferred embodiment at least one static lens is arranged between the folding component and the image sensor along the optical path, and the at least one static lens is movably mounted within a housing wherein a linear actuator is configured to displace the at least one static lens along the static optical axis to alter the focus plane and/or the zoom of the imaging optical system.

The at least one rigid lens may be formed as a part of a set of rigid lenses. The rigid lens is, in a manner known per se, a collecting optical system that produces a real optical image of an object to be captured by the imaging optical system. By means of the linear actuator, the lens can be a zoom lens, for which the focal length and thus angle of view can be varied. The linear actuator may include at least one magnet and a plurality of coils, which are distributed parallel to the optical path. The position of the at least one rigid lens can be adjusted by a temporally staggered generation of a current in a plurality of coils, such that a moving magnetic field is generated, which is followed by the magnet of the linear actuator and thus effects the movement of the at least one rigid lens.

In a preferred embodiment, the static lens is mounted by means of a bearing comprising a rolling element, a magnet and a magnetic rail being cooperatively configured to bias the lens against the housing via the rolling element.

By means of the further development described above, the rolling element is permanently preloaded without using a mechanical actuator. For this purpose, the rolling element can be enclosed between the magnet and the magnetic rail, so that the attractive force between the magnet and the magnetic rail exerts a permanent load on the rolling element. The magnet and the magnetic rail are preferably held by housing components that are movable relative to one another and each have a suitable rolling surface for the rolling element. Through the interaction between the magnet and the magnetic rail, it is thus possible in a reliable manner to permanently enable a contact pressure between the intended bearing elements of such a rolling bearing arrangement. This improves the reliability of the bearing for adjusting the static lens.

In the following, examples of the present invention and its preferred embodiments are described with reference to the accompanying drawings.
- Figure 1: shows an imaging optical system according to a first embodiment of the invention;
- Figure 2: shows an imaging optical system according to a second embodiment of the invention.

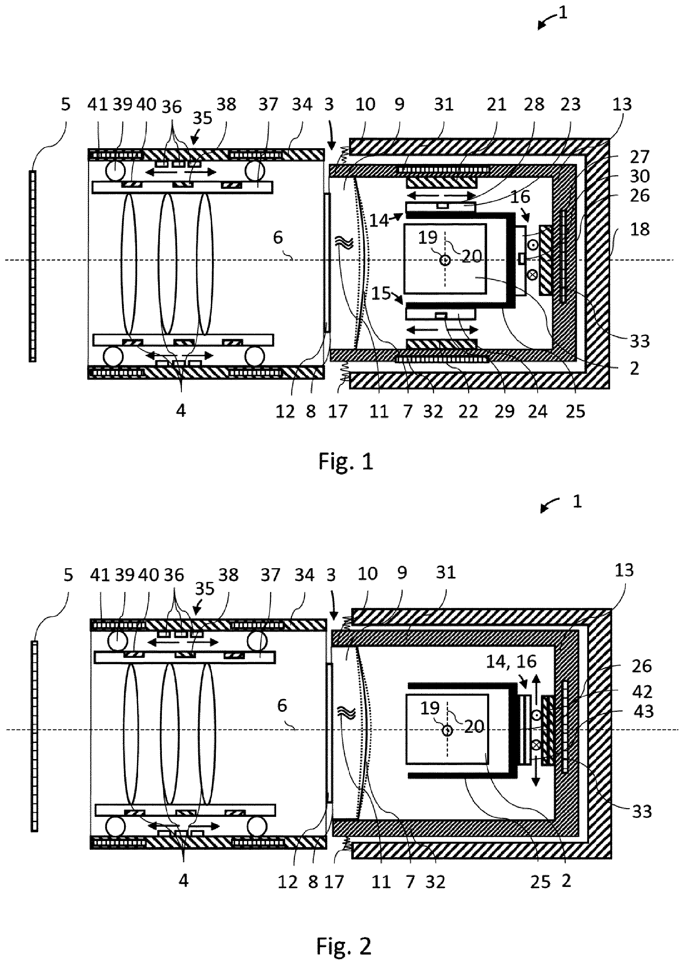

For better understanding, the reference numerals as used in Figures 1 and 2 are listed below.
- 1: Imaging optical system
- 2: Folding component
- 3: Tunable lens
- 4: Static lens
- 5: Image sensor
- 6: Optical axis
- 7: First optical surface
- 8: Second optical surface
- 9: Internal space
- 10: Container wall
- 11: Optical liquid
- 12: Flat glass
- 13: Cage element
- 14: First Actuator
- 15: First Actuator
- 16: Second Actuator
- 17: Spring element
- 18: Housing
- 19: First rotation axis
- 20: Second rotation axis
- 21: Magnet
- 22: Magnet
- 23: Coil
- 24: Coil
- 25: Carrier
- 26: Magnet
- 27: Coil
- 28: Position sensor
- 29: Position sensor
- 30: Position sensor
- 31: Magnetic shield
- 32: Magnetic shield
- 33: Magnetic shield
- 34: Housing
- 35: Linear actuator
- 36: Coils
- 37: Moveable Housing
- 38: Magnet
- 39: Rolling element
- 40: Magnet
- 41: Magnet rail
- 42: First plane
- 43: Second plane

Figure 1 shows a first embodiment of an imaging optical system 1 in top view.

The imaging optical system 1 shown in Figure 1 can be designed for use in a mobile phone (not shown) and to optically detect an object according to the functionality of a camera. In order to improve the image quality, it is possible to compensate for the negative influence of an unsteady guidance of the cell phone by performing a so-called optical image stabilization. In addition, an autofocus function and a zoom function are provided.

The imaging optical system 1 comprises a folding element 2, a tunable optical component 3, which is designed as a tunable lens, a plurality of rigid lenses 4 and an image sensor 5, all of which lie in a common optical path of the imaging optical system 1. According to this embodiment, the optical path of the imaging system runs orthogonally through the image plane and is deflected by 90° by means of the folding element 2 such that a part of the optical path runs along the optical axis 6. In other words, optical axis 6 corresponds to a part of the optical path, which runs between the image sensor 5 and the folding element 2. It is an advantage of the embodiment as shown in Figure 1 that the major amount of the components of the imaging optical system are arranged along the optical axis 6. Advantageously, the imaging optical system 1 can be incorporated in mobile phones having a flat design, wherein the optical axis 6 extends in the main extension plane of the mobile phone.

The tunable optical component 3 comprises two optical surfaces 7, 8 that each are designed as deformable membranes, wherein optical surface 7 is a first optical surface that faces the folding component 2 and wherein the optical surface 8 is a second optical surface that faces away from the folding component 2. Between the optical surfaces 7 and 8 there is an internal space 9, which is delimited by a container wall 10 in lateral direction with respect to the optical axis 6. The container wall 10 may be considered as a third optical surface of the tunable optical component 3.

The internal space 9 is filled with a transparent optical liquid 11. By changing a relative position between the both optical surfaces 7 and 8 it is possible, to change at least one optical property of the tunable lens. This allows the course of the optical path to be changed as required, for example in order to compensate for undesired vibration of the cell phone and thereby provide the above-mentioned optical image stabilization.

Additionally, it is possible to change the focal plane of the tunable optical component 3 and thereby effect a change of the focal plane in order to improve the image quality. As shown in Figure 1, this is done by moving the tunable optical component against a flat glass 12, which deforms the second optical surface 8 and increases the pressure in the transparent liquid 11. This in turn causes a change of curvature of the first surface 7 facing the folding component 2. The variability of the curvature geometry of the second surface is indicated by dashed lines in Figure 1.

To effect an adjustment of the tunable optical component 2, the imaging optical system 1 shown in Figure 1 has a design that includes a cage element 13 that is movably mounted with respect to the folding element 2 and can be dislocated by means of a plurality of actuators 14, 15, 16 in order to perform the functions described above. As can be seen in Figure 1, cage element 13 surrounds the folding component 2 on three sides. Along the optical path, the cage element has two openings, one of which is open in the image plane and the other in the direction of the tunable optical component 3. The optical path thus impinges the folding component 2 through one opening, is folded by 90° and leaves the cage element 13, through another opening along the optical axis 6.

According to the embodiment shown in Figure 1, a flat spring element 17 is arranged between the cage element 13 and a housing component 18 of the imaging optical system 1. The spring element 17 is a bearing element and serves to movably guide the cage element 13 in order to achieve a deformation of the internal space 9. Here, two ends of the cage element 13 are mechanically coupled to the tunable optical component 3 circumferentially in the region of the container wall 10. Such a mechanical coupling allows movements and forces of the cage element 13 to be transferred to the tunable optical component 3.

According to its function as a bearing element, the spring 17 serves to define the degrees of freedom of the cage element, whereby in the present case a displacement of the cage element 13 along the optical axis 6, a tilt about a first rotation axis 19 and a tilt about a second rotation axis 20 is possible. As mentioned above, this is made possible in the example shown by means of three actuators 14, 15, 16, as explained in detail in the following.

Actuators 14 are 15 identical and can both be considered a first actuator in terms of the invention. Actuator 14 and 15 each comprise a magnet 21, 22 and a coil 23, 24 wherein the magnets 21, 22 are arranged on the cage element 13 and are thus moveable with respect to the folding element 2. The coils 23, 24 are held by a carrier 25, which is fixedly arranged with respect to the folding component 2. Magnets 21, 22 and coils 23, 24 of the actuators 14 and 15 are arranged such that the generation of a current in the coils 23, 24 causes a magnetic field with a magnetic force, which acts on the respective opposing magnets 21, 22 and thus causes a displacement of the cage element 13. In the embodiment shown here, the possible directions of the forces that can be exerted on the cage element 13 by means of the actuators 14 and 15 are illustrated with arrows. By generating an electric current in the coils 23, 24, a tilting of the cage element about the first rotation axis 19 can be caused by means of oppositely directed forces of the actuators 14 and 15. However, it is equally possible to have the forces act in the same direction, causing a linear displacement of the cage element 13 along the optical axis 6.

The actuator 16 can be seen as a second actuator in terms of the invention and also comprises a magnet 26 and a coil 27. Magnet 26 and coil 27 are arranged along the optical axis 6. As described with respect to the actuators 14 and 15, magnet 26 is located on the cage element 13, while coil 27 is held by carrier 25 together with coils 23, 24. In accordance with the explanations regarding actuators 14 and 15, it is also possible to generate an electric current in coil 27 in order to exert a displacement force on the magnet 26. In contrast to the actuators 14 and 15, the forces exerted on the cage element 13 in this case act in or out of the image plane, as also illustrated by the arrows. These forces can cause the cage element 13 to tilt about the second axis of rotation 20.

Each of the actuators 14, 15, 16 comprises a Hall-sensor 28, 29, 30, which allows to determine a position of the cage element 13. The Hall-sensors 28, 29, 30 are connected to a controller (not shown) by means of a signal path. The controller is also connected to the coils 23, 24, 27 and define a control loop, in order to control the position of the cage element 13.

Magnetic shields 31, 32, and 33 are disposed on cage element 13 and respectively serve to magnetically cover the magnets 21, 22, and 26 from other magnetic fields and vice versa.

As mentioned above, the imaging optical system 1 according to Fig. 1 comprises a set of rigid lenses 4, that are arranged between folding component 2 and image sensor 5 along the optical path. The set of rigid lenses 4 is held by a housing 37, which is moveably arranged in another housing 34 by means of rolling elements 39. A linear actuator 35 is configured to displace the set of static lenses 4 along the optical axis 6 to alter the focus plane and/or the zoom of the imaging optical system 1. For this purpose, the actuator 35 comprises a plurality of coils 36 that are distributed in the housing 34 parallel to the optical axis 6. A magnetic force may be generated by the coils 36 in order to displace the housing 37 with respect to housing 34 and therefore alter the position of the set of lenses 4 along the optical axis 6.

To ensure that the bearing arrangement shown here is as free of play as possible, the embodiment according to Figure 1 also provides for the rolling elements 39 between the housings 34 and 37 to be preloaded by means of a magnet 40 and a magnetic rail 41. Here, magnet 40 is arranged on housing 37, while magnetic rail 41 is arranged on housing 34 and extends parallel to the optical axis 6. The attractive force between the magnet 40 and the magnetic rail 41 causes the housings 34 and 37 to be permanently pressed against the rolling element 39, thus reducing bearing play.

It should be noted that the linear actuator 35 and the magnetic rail 41 can be arranged in different parts of the housing 34 with respect of its circumference in order to make optimum use of the available design space.

Figure 2 shows another embodiment of an imaging optical system 1, which basically has the same structural components as already described with respect to Figure 1. However, there is a difference in the arrangement and mode of action of the actuators. Contrary to Figure 1, there are no actuators that are arranged lateral to the optical axis 6. Instead, all actuators 14, 16 are arranged on the optical axis 6.

The first actuator 14 comprises a first pair of coils that are arranged in a common first plane and are configured such that in the event of a current flow two opposing magnetic field forces interact with the at least one magnet that is arranged on the cage element and generates a force that causes the rotation of the cage element about the first rotation axis 19. The second actuator 16 comprises a second pair of coils that are arranged in a common second plane that is parallel to the first plane and are configured such that in the event of a current flow two opposing magnetic field forces interact with the magnet that is arranged on the cage element and generates a displacement force that causes the rotation of the cage element about the second rotation axis 20. This allows to achieve an optical image stabilization. The focus functionality is achieveable by a movement of the set of static lenses 4 along the optical axis 6, as already described with regard to Figure 1.

## Claims

1. Imaging optical system (1) comprising
- a folding component (2) and a tunable optical component (3) that are arranged on an optical path of the optical system (1);
- wherein the tunable optical component (3) comprises a first optical surface (7), a second optical surface (8) and a deformable internal space (9) between the first optical surface (7) and the second optical surface (8), which internal space (9) is filled with a transparent liquid (11), wherein an optical property of the tunable optical component (3) is adjustable by altering a shape of the internal space (9);
- the imaging optical system (1) further comprising a moveably mounted cage element (13) that at least partly encloses the folding component (2) and is mechanically coupled to the tunable optical component (3) such that a displacement of the cage element (13) causes a change of the optical property of the tunable optical component (3);
- an actuator (14, 15, 16) that is arranged between the folding component (2) and the cage element (13) and the actuator (14, 15, 16) is configured to exert a displacement force to the cage element (13).

2. Imaging optical system (1) according to claim 1,
wherein either the tunable optical component (3) is a tunable prism,
the first optical surface (7) is rigid and the second optical surface (8) is rigid, and
the optical property is adjustable by changing an angle between the first optical surface (7) and the second optical surface (8), or
wherein the tunable optical component (3) is a tunable lens,
the first optical surface (7) and/or the second optical surface (8) is deformable, and
the optical property is adjustable by changing an angle between the first optical surface and the second optical surface and/or by changing a shape of the deformable first optical surface (7) and/or the second optical surface (8).

3. Imaging optical system (1) according to claim 2,
wherein the imaging optical system (1) comprises at least one image sensor (5) that is arranged in the optical path of the imaging optical system (1), wherein the folding component (2) is arranged between the tunable optical component (3) and the image sensor (5) along the optical path.

4. Imaging optical system (1) according to claim 2,
comprising at least one image sensor (5) that is arranged in the optical path of the optical system (1) and wherein the tunable optical component (3) is arranged between the folding component (2) and the image sensor (5) with respect to the optical path.

5. Imaging optical system (1) according to one of the preceding claims,
wherein the cage element (13) is moveably mounted with respect to the folding component (2) by a bearing means (17),
wherein the bearing means (17) is configured such that the cage element (13) is rotatable about at least one rotation axis (19, 20) that is perpendicular to an optical axis (6), which extends between the folding component (2) and the tunable optical component (3), such that an optical image stabilization is effected by means of the imaging optical system (1),
and/or wherein the bearing means (17) is configured such that the cage element (13) is displaceable along the optical axis (6) that extends between the folding component (2) and the tunable optical component (3), such that focusing is effected by means of the imaging optical system (1),

6. Imaging optical system (1) according to claim 5,
wherein the bearing means (17) is an elastic spring element that is essentially flat and in at least one state extends perpendicular to the optical axis (6) between the cage element (13) and the tunable optical component (3), preferably wherein the bearing means (17) comprises a mechanical abutment that delimits a displacement of the cage element (13).

7. Imaging optical system (1) according to one of the preceding claims, wherein
the actuator (14, 15, 16) comprises at least one coil (23, 24, 27) and at least one magnet (21, 22, 26), wherein
the coil (23, 24, 27) is fixedly arranged with respect to the folding component (2) and the magnet (21, 22, 26) is fixedly attached to the cage element (13), wherein preferably
the magnet (21, 22, 26) is arranged at a distance between 3 mm and 15 mm, highly preferably a distance between 5 mm and 10 mm, to the rotation axis (19,20) of the cage element (13).

8. Imaging optical system (1) according to claim 7, wherein
a magnetic shield element (31, 32, 33) is arranged on a side of the magnets (21, 22, 26) facing away from the coil (23, 24, 27) respectively.

9. Imaging optical system (1) according to claim 7 or 8,
wherein the actuator (14, 15) is a first actuator (14, 15) and the displacement force is a first displacement force,
and wherein the coil (23, 24) and the magnet (21, 22) of the first actuator (14, 15) are arranged such that the first displacement force causes a rotation of the cage element about a first rotation axis (19) that is perpendicular to the optical axis (6) such that an optical imaging stabilisation is effected by means of the imaging optical system (1),
and/or wherein at least the first displacement force is directed parallel to the optical axis (6) and causes a displacement of the cage element (13) along the optical axis (6) such that a change of the focal plane of the tunable optical component (3) is effected.

10. Imaging optical system (1) according to claim 9,
further comprising a second actuator (16) with at least one coil (27) and at least one magnet (26), wherein
the coil (27) is fixedly arranged with respect to the folding component (2) and the magnet (26) is fixedly attached to the cage element (13),
wherein the coil (27) and the magnet (26) of the second actuator (16) are arranged such that the second displacement force causes a rotation of the case element (13) about a second rotation axis (20) that is perpendicular to the first rotation axis (19) and perpendicular to the optical axis (6).

11. Imaging optical system (11) according to at least claims 9 and 10,
wherein the first actuator (14) comprises a first pair of coils that are arranged in a common first plane (41) and are configured such that in the event of a current flow two opposing magnetic field forces interact with the at least one magnet (21) of the first actuator that is arranged on the cage element (13) and generate the first displacement force that causes the rotation of the cage element (13) about the first rotation axis (19),
and wherein the second actuator (16) comprises a second pair of coils that are arranged in a common second plane (42) that is parallel to the first plane (41) and are configured such that in the event of a current flow two opposing magnetic field forces interact with the at least one magnet (26) of the second actuator that is arranged on the cage element (13) and generate the second displacement force that causes the rotation of the cage element about the second rotation axis (20),
wherein an optical image stabilization is effected by means of the first actuator (14) and/or the second actuator (16).

12. Imaging optical system (1) according to one of the preceding claims,
with at least one position sensor (28, 29, 30), particularly a hall sensor, arranged such as to detect a displacement of the cage element (13) with respect to a fixedly arranged component of the optical system (1), in particular a coil (23, 29, 27) and/or the folding component (2).

13. Imaging optical system (1) according to claim 12,
wherein a controller is connected to both the position sensor (28, 29, 30) and the actuator (14, 15, 16) by means of a signal-path and is configured to control a relative displacement of the cage element (13) with respect to the folding component (2) of the optical system (1) as a function of a position signal of the position sensor (28, 29, 30).

14. Imaging optical system (1) according to at least one of the claims 3 or 4,
with at least one static lens (4) that is arranged between the folding component (2) and the image sensor (5) along the optical path, and the at least one static lens (4) is movably mounted within a housing (34) wherein a linear actuator (35) is configured to displace the at least one static lens along (4) the optical axis (6) to alter the focus plane and/or the zoom of the imaging optical system (1).

15. Imaging optical system (1) according to claim 14,
wherein the static lens (4) is mounted by means of a bearing comprising a rolling element (39), a magnet (40) and a magnetic rail (41) being cooperatively configured to bias the static lens (4) against the housing (34) via the rolling element (39).
